# EUROPEAN PATENT SPECIFICATION

(11) **EP 3 788 708 B1**
(45) Date of publication and mention of the grant of the patent: **23.09.2026**
(21) Application number: 19744885.5
(22) Date of filing: 01.05.2019
(51) Int. Cl.: H02M 3/07, H02J 7/34, H02J 50/00, H02M 1/00

(54) **A DIRECT CURRENT TO DIRECT CURRENT ELECTRIC POWER CONVERTER**
GLEICHSPANNUNGSSTROMWANDLER
CONVERTISSEUR DE PUISSANCE ÉLECTRIQUE COURANT CONTINU-COURANT CONTINU

(30) Priority: 01.05.2018 NL 2020857
(43) Date of publication of application: 10.03.2021
(73) Proprietor: Nexperia B.V., 6534 AB Nijmegen (NL)
(72) Inventor: RODRIGUES MANSANO, Andre Luis, 2629 JD Delft (NL)
(74) Representative: Pjanovic, Ilija
(86) International application number: PCT/NL2019/050254
(87) International publication number: WO 2019/212342

(56) References cited:
- US-A- 5 095 223
- US-A1- 2011 121 661
- US-B1- 6 657 875

## Description

The present invention relates in general to converting electric power, and in particular to converting direct current to direct current.

### Background

An electric power converter is a device which converts electric energy from one form to another form, e.g. from an Alternating Current, AC, to a Direct Current, DC. Electric power converters may also convert a voltage level or a frequency or a combination of both. The present invention in particular relates to DC to DC converters.

DC to DC are typically used in portable electronic devices such a cellular phone, laptop computer or portable computers but also in Internet-of-Things, loT, devices. In such applications the main power supply often (primarily) comes from a battery. Many of these devices have electronic circuits and sub-circuits require different voltage levels from that same battery.

Charge pumps are a specific kind of DC to DC converters which use particular circuit layouts to increase (or lower) the voltage level through several stages. Charge pumps, especially of a particular kind, are known for having a high efficiency in conversion without requiring a large number of electric components. Such high conversion efficiency is a typical requirement within the field of loT devices since lifetime of the device needs to be sufficient that no or almost no battery replacement is required and the footprint and/or bill of materials should be small as well. Replacing the battery is undesirable since it takes time, off-line time of the device, human interference, is relatively costly (when compared to the other basic electric components often used in the device), and above all, is very environment unfriendly.

To decrease the dependency from the battery the popularity of energy harvesters for providing power to the loT devices rapidly increases. The output power and especially the voltage level from the energy harvesters may however not be sufficient for typical loT applications.

In view of the above, there is a need for efficient power conversion from a very low voltage level towards a voltage level sufficient for loT device or the like, without requiring elaborate, complex additional components or circuits.

### Summary

It is an object of the present invention to provide a DC to DC converter with improved efficiency level.

It is a further object of the present invention, to provide a DC to DC converter with improved efficiency level, with a minimal number of electrical components which is capable of converting a low voltage, for example provided by an energy harvester, into a higher voltage, for example suitable for powering an loT device.

This object is, according to the invention, provided by an electric power converter unit for converting Direct Current to Direct Current, DC-DC, the converter unit comprising:
- a single stage DC-DC converting module, arranged for connecting with an energy harvesting module for receiving a low voltage DC input thereof and converting the low voltage into a higher voltage arranged for providing a DC output to a load, such as an Internet of Things, loT, device;
- a controller module, arranged for enabling and disabling said converting of said low voltage into said higher voltage of said single stage DC-DC converting module
- an energy storage module, comprising a switch and an energy storage unit, arranged for intermediate storage of energy of the DC output, and for providing the intermediate energy storage to the single stage DC-DC converting module as a DC input; wherein the controller module is further arranged to disconnect the load from the converter unit, enable said single stage DC-DC converting module to convert the DC input to the DC output, store DC output energy of said DC output in the energy storage unit, during a first conversion cycle and to drive the switch of the energy storage module for the single stage DC-DC converting module to convert the voltage from the energy storage unit to the DC output, and disconnect said energy harvesting module from said converter unit, during a subsequent second conversion cycle, and wherein the load is connected to the convert unit after the second conversion cycle.

Electric power converters may be arranged to convert an input DC voltage into a certain DC output voltage. The conversion ratio between the input and output voltage level is determined by the configuration of the converter and is limited. The voltage level can only be converted by a maximum ratio, very big ratios, which for example are often required if the energy source provides very low, e.g. mV, voltage levels, and load requires much higher levels, e.g. 1V to 5V.

Most known converters are so called inductive converters which use a continuous mode of operation. They have conversion ratio limit of approximately 20. Hence a conversion factor of N between 1 and 20. For loT or WSN device that are powered (primarily) from an energy harvesting source, this is insufficient.

To increase the conversion factor, a cascade of converter circuits may be used. Such a double staged converter however not only leads to lower performance, it also significantly increases (doubles) the required number of electric components.

It was the insight of the inventors to use and re-use the same single converter and include an energy storage module which comprises at least an energy storage unit and a switch for operating said module and therewith connecting said energy storage unit for charging thereof upon a first conversion cycle. At the end of the first cycle the energy (voltage) in the storage unit is used as input on the same single converter to further increase the voltage level to obtain a further increase of the conversion factor. During these cycles, the load is disconnected from the converter and once the first and second cycle are finished, the load is connected again.

In a further not-claimed example, the controller is arranged for a third, or even fifth, sixth of further conversion cycle following the second cycle and prior to connecting the load.

Each of the conversion cycles separately can provide a certain conversion factor N1 and N2, which may typically range from 2 to 32 times. The total conversion factor N total = N1*N2, wherein N1 being the first conversion factor, and N2 the second. With the converter according to the first example, the conversion factor of N total = Nmax² can be obtained.

In an example, the single stage DC-DC converting module is arranged for providing a conversion with a conversion factor of N total = N max², wherein N max is the maximum conversion factor of the single stage DC-DC converting module.

The converter according the present invention may have a total conversion factor that is higher than a (single stage) converter which is placed in cascade with a further (single stage) converter to form a double stage converter, without requiring a large number of additional components and without affecting power efficiency.

In an example, the converter further comprises a pre-charge module, arranged for providing a pre-charge voltage to the load during a pre-charge cycle, and wherein the controller module is arranged for controlling the pre-charge module for initiating a pre-charge cycle prior to the first conversion cycle.

In an example, the pre-charge module is having a high input impedance for increasing the input impedance of the converter unit during the pre-charge cycle.

The pre-charge is typically highly suitable for loT devices or the like which are powered by energy harvesters. In such applications, the loT device may have several power consumption levels, e.g. during a sleep and during an active mode in which for example the high-power demanding RF transmitter becomes active. The pre-charge module makes the converter highly suitable for such applications.

In another not-claimed example, the single stage DC-DC converting module is arranged for converting a DC input from an energy harvesting module and the pre-charge module is arranged for converting a DC input from a battery.

In an example, the load is disconnected during the pre-charge cycle, during the first conversion cycle, and during the second conversion cycle, and wherein the load is connected in an active load cycle following the pre-charge, first and second conversion cycles.

In a second aspect, there is provided, an energy harvesting device, arranged for harvesting energy from at least one external source such as solar, thermal, wind, salinity, kinetic, RF energy, for powering an Internet of Things, IoT, or Wireless Sensor Node, WSN device, the energy harvesting device comprising:
- an energy harvesting module for harvesting energy from the external source and providing a DC output to an electric power converter unit,
- an electric power converting unit for converting the DC output into a DC output for the loT or WSN device; the electric power converting unit comprising an electric power converting unit according to any of the previous descriptions.

The above-mentioned and other features and advantages of the disclosure will be best understood from the following description referring to the attached drawings. In the drawings, like reference numerals denote identical parts or parts performing an identical or comparable function or operation.

### Brief description of the drawings

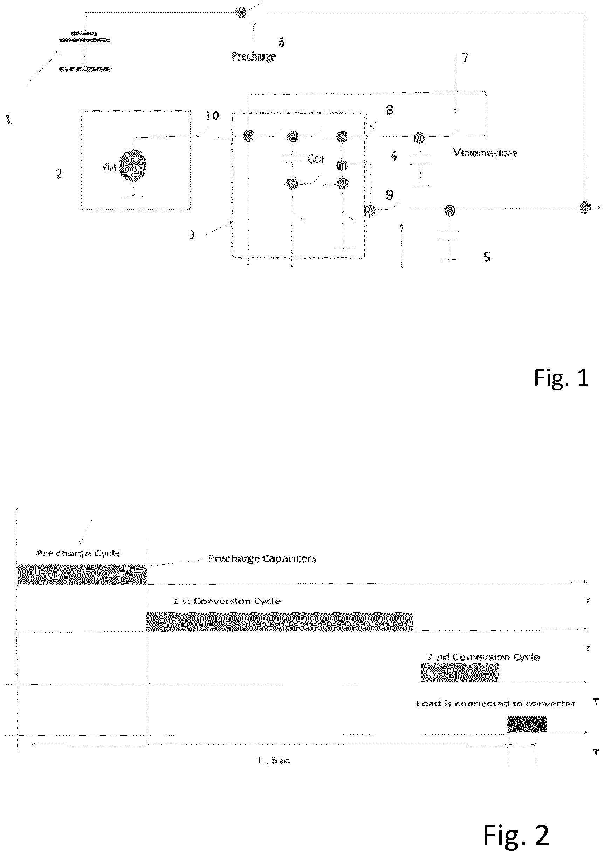

Figure 1 shows in an schematic manner a circuit layout of a DC to DC converter according to a first aspect of the invention.

### Detailed description of the drawings

Figure 1 schematically depicts a structure of the novel DC-DC converter where the reference figures depict:
   1 An energy cell; e.g. battery, charged supercapacitor, a complementary energy harvester.
   2 an energy harvested source.
   3 A single stage DC-DC converter.
   4 An energy storage for intermediate voltage.
   5 a load output energy storage element.
   6 a pre-charge switch.
   7 A switch for intermediate energy storage
   8 a 1st output switch.
   9 a 2nd output switch.
   10 an Input switch.
Fig. 2 depicts a sequence of the cycles used in the novel converter

The novel DC-DC converter as shown in figure 1 is using switch 8 to connect an energy storage for intermediate voltage (4) during 1st conversion cycle. During this cycle the switch 10, and 8 are closed and the switch 9 and 7 are open. Such switch configuration allows to convert input Voltage according to the conversion factor; Vout1 = Vin *N1, where $N 1 = Vout \left(1st cycle\right) / Vin ;$

During the 2nd conversion cycle the switches 10 and 8 are open and switches 9 and 7 are closed. That means that the energy storage for intermediate voltage (4) is acting as input voltage source during the 2nd conversion cycle.

Vout2 = V intermediate * N2. Where N2 is a conversion factor during the 2^{nd} conversion cycle. This means that the novel DC-DC converter provides a conversion factor of N conversion = N1*N2. It means that the single stage DC-DC converter allows to achieve conversion factor N = Nmax² and Nmax is the maximal possible conversion factor of the single stage DC-DC converter working in conventional mode.

During the pre-charge cycle, which is normally active before 1st conversion cycle, the load output energy storage element (5) is pre-charged up to necessary output voltage level when the switch 6 is closed.

## Claims

1. An electric power converter unit for converting Direct Current to Direct Current, DC-DC, said converter unit comprising:
- a single stage DC-DC converting module (3), arranged for connecting with an energy harvesting module (2) for receiving a low voltage DC input thereof and converting said low voltage into a higher voltage arranged for providing a DC output to a load, such as an Internet of Things, IoT, device;
- a controller module, arranged for enabling and disabling said converting of said low voltage into said higher voltage of said single stage DC-DC converting module (3);
- an energy storage module (4, 7, 8), comprising a switch (8) and an energy storage unit (4), arranged for intermediate storage of energy of said DC output, and for providing said intermediate storage of energy to said single stage DC-DC converting module (3) as said DC input; wherein said controller module is further arranged to disconnect said load from said converter unit, enable said single stage DC-DC converting module (3) to convert said DC input to said DC output, and store DC output energy of said DC output in said energy storage unit (4), during a first conversion cycle and to drive said switch (8) of said energy storage module for said single stage DC-DC converting module (3) to convert said voltage from said energy storage unit (4) to said DC output, and disconnect said energy harvesting module (2) from said converter unit, during a subsequent second conversion cycle, and wherein said load is connected to said converter unit after said second conversion cycle.

2. The electric power converter unit according to claim 1 further comprising a pre-charge module, arranged for providing a pre-charge voltage to said load during a pre-charge cycle, and wherein said controller module is arranged for controlling said pre-charge module for initiating a pre-charge cycle prior to said first conversion cycle.

3. The electric power converter unit according to claim 2, wherein said load is disconnected during said pre-charge cycle, during said first conversion cycle, and during said second conversion cycle, and wherein said load is connected in an active load cycle following said pre-charge, first and second conversion cycles.

4. An energy harvesting device, arranged for harvesting energy from at least one external source of solar, thermal, wind, salinity, kinetic, RF energy, for powering an Internet of Things, IoT, or Wireless Sensor Node, WSN device, said energy harvesting device comprising:
- an energy harvesting module for harvesting energy from said external source and providing a DC output to an electric power converter unit,
- an electric power converting unit for converting said DC output into a DC output for said least one external source; said electric power converting unit comprising an electric power converting unit according to any of the claims 1-3.

## Patentansprüche

1. Elektrische Leistungswandlereinheit zum Wandeln von Gleichstrom in Gleichstrom, DC-DC, wobei die Wandlereinheit Folgendes umfasst:
- ein einstufiges DC-DC-Wandlungsmodul (3), das zum Herstellen einer Verbindung zu einem Energiegewinnungsmodul (2) zum Aufnehmen einer niedrigen Eingangsgleichstromspannung davon und zum Wandeln der niedrigen Spannung in eine höhere Spannung angeordnet ist, das zum Bereitstellen eines Ausgangsgleichstroms für einen Verbraucher, etwa eine Vorrichtung des Internets der Dinge, IoT-Vorrichtung, angeordnet ist;
- ein Steuermodul, das zum Aktivieren und Deaktivieren des Wandelns der niedrigen Spannung in die höhere Spannung des einstufigen DC-DC-Wandlungsmoduls (3) angeordnet ist;
- ein Energiespeichermodul (4, 7, 8), das einen Schalter (8) und eine Energiespeichereinheit (4) umfasst, die zur Zwischenspeicherung von Energie des Ausgangsgleichstroms und zum Bereitstellen der zwischengespeicherten Energie für das einstufige DC-DC-Wandlungsmodul (3) als den Eingangsgleichstrom angeordnet ist; wobei das Steuermodul ferner dazu angeordnet ist, während eines ersten Wandlungszyklus den Verbraucher von der Wandlereinheit zu trennen, das einstufige DC-DC-Wandlungsmodul (3) zum Wandeln des Eingangsgleichstroms in den Ausgangsgleichstrom zu aktivieren und Ausgangsgleichstromenergie des Ausgangsgleichstroms in der Energiespeichereinheit (4) zu speichern und den Schalter (8) des Energiespeichermoduls für das einstufige DC-DC-Wandlungsmodul (3) anzusteuern, um die Spannung aus der Energiespeichereinheit (4) in den Ausgangsgleichstrom zu wandeln, und während eines darauffolgenden, zweiten Wandlungszyklus das Energiegewinnungsmodul (2) von der Wandlereinheit zu trennen, und wobei der Verbraucher nach dem zweiten Wandlungszyklus mit der Wandlereinheit verbunden wird.

2. Elektrische Leistungswandlereinheit nach Anspruch 1, die ferner ein Vorlademodul umfasst, das zum Bereitstellen einer Vorladespannung für den Verbraucher während eines Vorladezyklus angeordnet ist, wobei das Steuermodul zum Steuern des Vorlademoduls zum Einleiten eines Vorladezyklus vor dem ersten Wandlungszyklus angeordnet ist.

3. Elektrische Leistungswandlereinheit nach Anspruch 2, wobei der Verbraucher während des Vorladezyklus, während des ersten Wandlungszyklus und während des zweiten Wandlungszyklus getrennt wird und wobei der Verbraucher in einem aktiven Verbraucherzyklus nach dem Vorlade-, dem ersten und dem zweiten Wandlungszyklus verbunden wird.

4. Energiegewinnungsvorrichtung, die zum Gewinnen von Energie aus mindestens einer externen Quelle von Solar-, Wärme-, Wind-, Salzgradienten-, kinetischer, HF-Energie zum Versorgen einer Vorrichtung des Internets der Dinge, IoT-Vorrichtung, oder einer Vorrichtung eines drahtlosen Sensorknotens, WSN-Vorrichtung, mit Leistung angeordnet ist, wobei die Energiegewinnungsvorrichtung Folgendes umfasst:
- ein Energiegewinnungsmodul zum Gewinnen von Energie aus der externen Quelle und zum Bereitstellen eines Ausgangsgleichstroms für eine elektrische Leistungswandlereinheit,
- eine elektrische Leistungswandlungseinheit zum Wandeln des Ausgangsgleichstroms in einen Ausgangsgleichstrom für die mindestens eine externe Quelle; wobei die elektrische Leistungswandlungseinheit eine elektrische Leistungswandlungseinheit nach einem der Ansprüche 1-3 umfasst.

## Revendications

1. Convertisseur de puissance électrique destiné à convertir un courant continu en courant continu, CC-CC, ledit convertisseur comprenant :
- un module de conversion CC-CC à un étage (3), conçu pour être connecté à un module de récolte d'énergie (2) afin de recevoir une entrée CC basse tension de celui-ci et convertir ladite basse tension en une tension plus élevée conçue pour fournir une sortie CC à une charge, telle qu'un dispositif de l'Internet des objets, IoT ;
- un module de commande, conçu pour activer et désactiver ladite conversion de ladite basse tension en ladite tension plus élevée du module de conversion CC-CC à un étage (3) ;
- un module de stockage d'énergie (4, 7, 8), comprenant un commutateur (8) et une unité de stockage d'énergie (4), conçu pour un stockage intermédiaire de l'énergie de ladite sortie CC, et la fourniture dudit stockage intermédiaire d'énergie audit module de conversion CC-CC à un étage (3) en tant que dite entrée CC ; dans lequel ledit module de commande est conçu en outre pour déconnecter ladite charge dudit convertisseur, permettre audit module de conversion CC-CC à un étage (3) de convertir ladite entrée CC en ladite sortie CC, et stocker l'énergie de sortie CC de ladite sortie CC dans ladite unité de stockage d'énergie (4), durant un premier cycle de conversion, et commander ledit commutateur (8) du module de stockage d'énergie dudit module de conversion CC-CC à un étage (3) pour convertir ladite tension provenant de ladite unité de stockage d'énergie (4) en ladite sortie CC, et déconnecter ledit module de récolte d'énergie (2) dudit convertisseur durant un second cycle de conversion ultérieur, et dans lequel ladite charge est connectée audit convertisseur après ledit second cycle de conversion.

2. Convertisseur de puissance électrique selon la revendication 1, comprenant en outre un module de précharge, conçu pour fournir une tension de précharge à ladite charge durant un cycle de précharge, et dans lequel ledit module de commande est conçu pour commander ledit module de précharge afin de lancer un cycle de précharge avant ledit premier cycle de conversion.

3. Convertisseur de puissance électrique selon la revendication 2, dans lequel ladite charge est déconnectée durant ledit cycle de précharge, durant ledit premier cycle de conversion, et durant ledit second cycle de conversion, et dans lequel ladite charge est connectée dans un cycle de charge actif après ledit cycle de précharge et lesdits premier et second cycles de conversion.

4. Dispositif de récolte d'énergie, conçu pour récolter de l'énergie à partir d'au moins une source externe d'énergie solaire, thermique, éolienne, saline, cinétique, RF, pour alimenter un dispositif de l'Internet des objets, d'IoT, ou d'un dispositif de nœud de capteur sans fil, WSN, ledit dispositif de récolte d'énergie comprenant :
- un module de récolte d'énergie pour récolter de l'énergie à partir de ladite source externe et fournir une sortie CC à un convertisseur de puissance électrique,
- une unité de conversion de puissance électrique pour convertir ladite sortie CC en une sortie CC pour ladite au moins une source externe ; ladite unité de conversion de puissance électrique comprenant une unité de conversion de puissance électrique selon l'une quelconque des revendications 1 à 3.
